# EUROPEAN PATENT SPECIFICATION

(11) **EP 4 365 487 B1**
(45) Date of publication and mention of the grant of the patent: **14.10.2026**
(21) Application number: 23207550.7
(22) Date of filing: 02.11.2023
(51) Int. Cl.: F21V 33/00, F21V 8/00, E04F 10/06, F21Y 115/10, E06B 9/72

(54) **ROLLER AWNING WITH LIGHTS**
ROLLOMARKISE MIT LEUCHTEN
STORE À ROULEAU AVEC LUMIÈRES

(30) Priority: 04.11.2022 IT 202200022728
(43) Date of publication of application: 08.05.2024
(73) Proprietor: Teleco Automation S.R.L., 31100 Treviso (IT)
(72) Inventor: BORSOI, Luigi, 31012 CAPPELLA MAGGIORE (TV) (IT); COLLOVINI, Roberto, 31100 TREVISO (IT)
(74) Representative: Braidotti, Andrea

(56) References cited:
- EP-A1- 2 119 847
- EP-A1- 2 902 565
- DE-U1- 202004 018 182

## Description

### FIELD OF TECHNOLOGY

The present invention concerns a roller awning with lights.

### STATE OF THE ART

Roller awnings are known comprising a sheet, which in the retracted awning condition is wound on a tubular shaft and in the unfolded awning condition it is unwound by said shaft and is kept extended by its connection with an edge to said tubular shaft and with the opposite edge to a rigid crosspiece, which can be moved closer or further away from the tubular shaft itself.

In the case of a cantilever awning, the tubular mast is supported by a support structure essentially consisting of a C-shaped bracket with the central wing attached to a wall and with the lateral wings supporting the tubular mast at its ends. Two pairs of articulated arms are also attached to the central wing of the C-shaped bracket, which when the sheet is unwound from the tubular shaft extend under the weight of the crosspiece, of the arms themselves and of the unwrapped portion of the sheet, and when the sheet is wrapped on the tubular shaft, they fold in opposite directions due to the bringing of the crosspiece closer to the support brackets of the tubular shaft.

The shape of the crosspiece is preferably such that, when the sheet is completely wrapped, the assembly formed by the C-shaped bracket and the crosspiece placed next to it defines a sort of closed container which houses the tubular shaft inside with the sheet completely wrapped around it. it, the pairs of folded articulated arms and the electromechanical and electronic equipment for moving, commanding and controlling the awning.

EP2119847 A1 describes a roller awning in which the articulation of the arms is obtained through discs which are fixed to the ends of said arms, which are interspersed each other with and are crossed by an articulation pin, which forms an articulation joint with said discs.

It is also known from EP3662203 B1 to apply a plurality of lights, in particular LED strips, to the lower edge of the articulated arms and/or of the crosspiece and/or of the support structure, which illuminate the underlying surface of the awning or create plays of light and in particular RGB effects.

In the particular case of LED strips applied to the articulated arms, they are connected to a power supply preferably housed inside the tubular shaft together with a radio receiver with LED output control driver or to a radio transceiver, which in addition to receiving commands for activation/regulation of the LED outputs, it can transmit signals on the status of the LEDs themselves, so that the user can remotely control, via a radio control or even via mobile phone (e.g. smartphone), the switching on, off and regulation of the LEDs and can receive, again with the mobile phone, information on the current status of these.

Since the movement arms of the crosspiece are articulated each other to at a joint, evidently the LED strip must be interrupted at this joint, since it could not flex to follow the articulated movements of one arm with respect to the other arm of the pair. It follows that the light strip created by the LEDs applied to the articulated arms must in any case be interrupted at the articulation joint of the arms themselves and this is undesirable as it contrasts with the aesthetic result that the LED strip aims to create. Furthermore the application of an isolated LED on the lower surface of the joint does not appear to be a satisfactory solution, both due to the need to power that LED with an unsightly electrical conductor visible from underneath the unfolded curtain, and due to the risk that at the end of the folding phase of the arms, i.e. when they are made to enter the container formed by the C-shaped bracket of the awning support structure and the crosspiece supported by the articulated arms, the LED can interfere with the movements of the various components of the awning and could be so damaged. Further prior art roller awnings are known from EP2902565 A1 and DE 202004018182 U1.

### PURPOSE OF THE INVENTION

The aim of the invention is to eliminate this drawback and to create a luminous continuity along the entire length of the articulated arms.

Another aim of the invention is to propose a roller awning which allows the drawbacks of known solutions at least in part to be overcome.

Another aim of the invention is to obtain substantial luminous continuity along the articulated arms without having electrical power wires visible from underneath the unfolded awning.

Another aim of the invention is to obtain this luminous continuity without substantially altering the external appearance of the awning and its support and movement structure.

Another aim of the invention is to obtain this luminous continuity by eliminating risks of hindering the movements of the articulated arms when closing the awning.

Another aim of the invention is to create this luminous continuity by eliminating risks of damage to the light sources applied in the articulation joint of the folding arms when the awning is retracted.

Another aim of the invention is to create this luminous continuity with minimal modifications of a traditional roller awning which does not present this luminous continuity.

Another aim of the invention is to propose a roller awning which allows to obtain a pleasant overall aesthetic effect and which provides the observer with the sensation of being faced with a high quality product, both on an aesthetic and functional level.

Another aim of the invention is to propose a roller awning which can be obtained simply and quickly.

Another aim of the invention is to propose a roller awning that can be mass-produced quickly and efficiently.

Another aim of the invention is to propose a roller awning that is easy and quick to assemble and install.

Another aim of the invention is to propose a roller awning which is of high standards, both functional and aesthetic, and at the same time of affordable cost, thus allowing the possibility of its widespread diffusion.

Another aim of the invention is to propose a roller awning that has an alternative characterization, both in constructive and functional terms, compared to traditional ones.

### SUMMARY OF THE INVENTION

All these objects and others that will appear from the following description are achieved according to the invention with a roller awning with lights as defined in claim 1.

### DESCRIPTION OF THE FIGURES

The present invention is further clarified below in some of its preferred practical embodiments reported for purely illustrative and non-limiting purposes with reference to the attached drawings, in which:

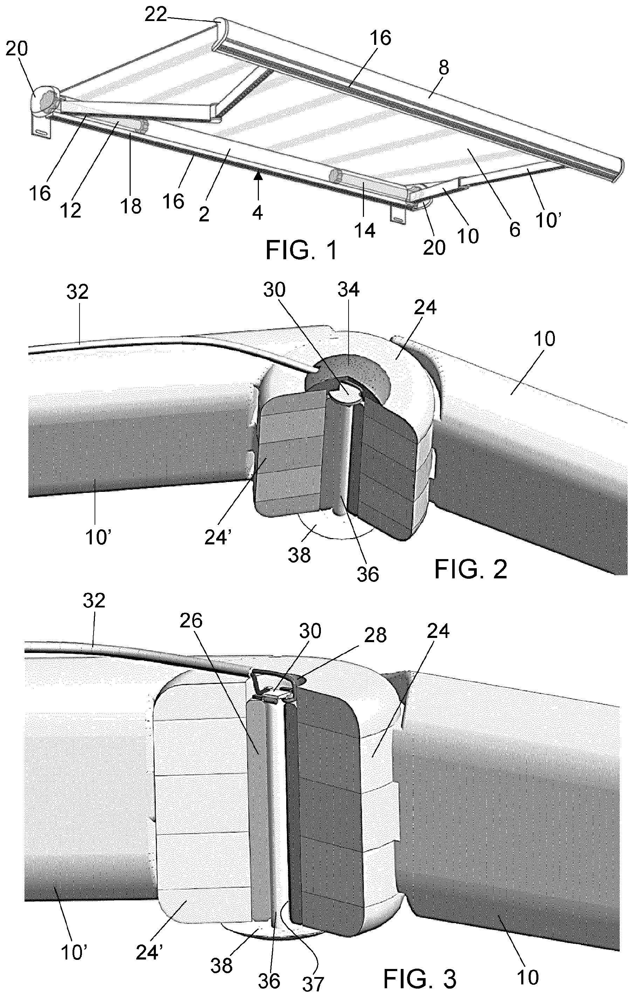

- Figure 1: shows a perspective view of a roller awning according to the invention in the unfolded condition,
- Figure 2: shows a partially sectioned perspective view of the enlarged detail of an articulation joint of two arms, and
- Figure 3: shows it in a different perspective view with some details removed.

### DETAILED DESCRIPTION OF THE INVENTION AND SOME PREFERRED EMBODIMENTS

As can be seen from the figures, the roller awning according to the invention is traditional in itself and includes a tubular shaft 2, a support structure 4 of the tubular shaft 2, a sheet 6 (or similar/equivalent covering element) which can be wrapped around the tubular shaft 2 and unrolled from this, a rigid crosspiece 8, to which the edge of the sheet 6 is applied opposite to that constrained by the tubular shaft 2, and two pairs of articulated arms 10,10' which connect the rigid crosspiece 8 to the support structure 4 and they guide its translational movements with respect to it.

The tubular shaft 2 can advantageously be a metal shaft, or made of other material, with a hexagonal or octagonal section or similar, of the type traditionally used for curtains and/or roller shutters.

The tubular shaft 2 can house inside it a traditional tubular motor 12 for rotating the awning, and also the shaft 2 for winding/unwinding the said sheet 6.

The tubular shaft 2 can house inside it a traditional device 14 for powering and controlling a plurality of light sources, in particular LED lights.

Preferably, inside the tubular shaft 2 there is housed a radio receiver or a radio transceiver with driver for controlling the LED outputs, which, in addition to receiving commands for activating/adjusting the LED outputs, can transmit signals on the status of the LEDs themselves, in so that the user can remotely control, via a radio control or even via smartphone or similar, the switching on, off and adjustment of the LEDs and can receive, again with the smartphone or similar, information on the current status of these.

Preferably, said LED lights are made up of LED strips 16 applied to the support structure 4 and/or to the crosspiece 8 and/or to the articulated arms 10.

Preferably, the support structure 4 is essentially made up of a C-shaped bracket, with a central wing 18, at which the structure 4 is fixed to a wall and with two lateral wings 20, which protrude outwards and they are configured to support the tubular shaft 2 and everything contained therein.

Preferably, the crosspiece 8 is made up of a profile with an arched section. Preferably, the crosspiece 8 is provided at the ends with two closing elements 22 having a shape complementary to the shape of the lateral wings 20 of the support structure 4, so that when the crosspiece adheres to this it defines with it a closed container which is housed in its inside the sheet 6 completely wrapped around the tubular shaft 2 and the two pairs of articulated arms 10, 10' completely folded .

The articulation joint between the two articulated arms 10,10' of each pair provides that one end of each arm is provided with discs 24,24' centrally perforated and configured so that they can be inserted between them to be crossed by a single pin 26, internally hollow, around which they can articulate. Conveniently, as can be seen from the figures, the pin 26 extends longitudinally and is open at its mutually opposite longitudinal ends; conveniently, as can be seen from the figures, the pin 26 is hollow and, in particular, includes an axial cavity 37 inside it.

In particular, the discs 24,24' are integral with/fixed respectively to the arms 10, 10'.

Preferably, in a possible embodiment illustrated in the figures, two discs 24 are integral with the arm 10 while three discs 24' are integral with the arm 10', which in the joint formed are arranged one between the two discs 24 of the arm 10 and two externally to these two discs 24. Preferably, a number of discs are attached to one arm which is one unit greater than the discs of the other arm.

Preferably, the discs 24, 24' are rounded, in particular at their outermost edge, similarly to the longitudinal edges of the arms 10, 10', to give the whole a linear and aesthetically pleasing appearance.

The ends of the hollow pin 26 stop at the two external discs 24'. Preferably, the pin 26 is mounted neutrally with respect to all the discs 24 and is instead made integral with at least one of the discs 24' by any traditional means, and in particular by means of screws.

Inside an upper cavity 28, preferably cylindrical shape, obtained in the upper disc 24', at the upper end of the pin 26, a printed circuit board 30 is applied, on which one or more LEDs are mounted, which face the axial cavity 37 of the pin itself.

The printed circuit board 30 is powered via a cable 32, which is fixed or associated with the upper edge of the arm 10' and enters the cylindrical cavity 28. Conveniently, the cable 32 can run along the upper edge of one of the two articulated arms 10 or 10' (which can be the arm to which the upper disc is attached or the other one).

Conveniently, in a possible embodiment not shown, the printed circuit board 30 is provided with a power battery for said at least one LED mounted on the board itself.

Preferably, the cavity 28 is then closed by a removable plug 34 preferably having the shape of a spherical cap, more preferably a flattened spherical cap. Preferably, the plug 34 can be crossed by the cable 32.

Inside the axial cavity 37 of the pin 26 there is a light guide 36, which has the upper end facing the LED fixed to the printed circuit board 30 and the lower end opening at the lower end of the axial cavity 37 of said pin 26.

Preferably, a light diffuser 38 is associated with the lower end of said light guide 36. Preferably, the lower end of the light guide 36 extends into a light diffuser 38. Conveniently, the light diffuser 38 can be single body with the light guide 36 or it can be removably fastened to the light guide 36 and/or to the axial cavity 37 of the pin 26.

Preferably, said light diffuser 38 has the shape of a spherical cap. Preferably, the shape of the light diffuser 38 is similar to the shape of the plug 34 closing the cavity 28.

Advantageously in this way, when the awning is unfolded, the light generated by the LED mounted on the printed circuit board 30 and preferably diffused by the light diffuser 38 creates substantial continuity with the light strips generated by the LEDs 16 applied to the lower edge of the arms 10 ,10', thus eliminating the inconvenience found in roller blinds with arms equipped with LED strips.

Furthermore, advantageously, the elimination of this drawback is achieved without substantially modifying the traditional conformation of the articulation joints of the arms 10,10' of a traditional roller awning, but simply by replacing the articulation pin of the latter with the hollow pin 26 provided with board 30 provided with LEDs, with light guide 36 and, preferably, with diffuser 38.

This allows you to modify the articulation joint of the arms of a traditional awning with a rather simple operation, which can also be carried out in existing awnings but not provided with this functionality.

Finally, advantageously, the power supply of the LED, which allows the articulation joint between the two arms 10, 10' to perform this new function, is obtained with a cable 32 which runs above one of the arms 10' and that is in position not visible as it is located on the opposite side to that intended for users of the tent.

The present invention has been illustrated and described in some of its preferred embodiments, but it is understood that executive variations may be made to them in practice, without however departing from the scope of protection as defined by the appended claims.

## Claims

1. Roller awning with lights, of a type comprising:
- a sheet (6),
- a shaft (2) for winding/unwinding said sheet (6),
- a structure (4) to support said shaft (2),
- a crosspiece (8) for constraining an edge of said sheet (6) opposite to that constrained to said shaft (2),
- pairs of articulated arms (10,10') for supporting and moving said crosspiece (8) with respect to said support structure (4), and
- a plurality of LED lights (16) fixed at least to said articulated arms (10,10'), wherein the articulation between said arms (10,10') is obtained through discs (24,24') which are fixed to the cooperating ends of said arms (10,10'), said discs (24, 24') being intercalated between them and being crossed by an articulation pin (26), which forms an articulation joint with said discs (24,24'), **characterized in that**:
- said pin (26) is hollow and has its upper end opening into an upper cavity (28) which is obtained in the upper disc (24') of the joint and which also houses a printed circuit board (30),
- at least one LED is mounted on said board (30) in a position facing an axial cavity (37) of said pin (26),
- within said axial cavity (37) a light guide (36) is housed which opens at the lower end of the axial cavity (37) of said pin (26).

2. Roller awning according to claim 1 **characterized in that** it comprises a light diffuser (38) at the lower end of said light guide (36).

3. Roller awning according to the previous claim, **characterized in that** said light diffuser (38) has the shape of a spherical cap.

4. Roller awning according to one or more of the previous claims **characterized in that** the upper cavity (28) of said disc (24') is closed by a plug (34) which is removable.

5. Roller awning according to the previous claim **characterized in that** said plug (34) has the shape of a spherical cap.

6. Roller awning according to claim 1 **characterized in that** it comprises a light diffuser (38) at the lower end of said light guide (36) and a plug (34) closing said upper cavity (28), and **in that** said light diffuser (38) has a shape substantially similar to the shape of said plug (34).

7. Roller awning according to one or more of the previous claims **characterized in that** said hollow pin (26) is fastened to at least one of the discs (24') integral with one (10') of the two articulated arms (10,10') and it is idle compared to all the discs (24) integral with the other articulated arm (10).

8. Roller awning according to one or more of the previous claims **characterized in that** said printed circuit board (30) is powered via a cable (32) which runs along the upper edge of the articulated arm (10'), to which said upper disc (24') is restricted.

9. Roller awning according to one or more of the claims 1 - 7 **characterized in that** said printed circuit board (30) is powered by a cable (32) which runs along the upper edge of one of the two articulated arms (10, 10').

10. Roller awning according to one or more of the previous claims **characterized in that** said plurality of LED lights (16) includes LED strips.

11. Roller awning according to one or more of the previous claims **characterized in that** at least two discs (24) are attached to one arm (10) while at least three discs (24') are attached to the other arm (10').

12. Roller awning according to one or more of the previous claims **characterized in that** said discs (24, 24') are rounded.

13. Roller awning according to one or more of the previous claims **characterized in that** the longitudinal edges of the arms (10,10') are rounded.

14. Roller awning according to one or more of the previous claims **characterized in that** LED lights are fixed to the rigid crosspiece (8) and/or to the support structure (4).

15. Roller awning according to one or more of the previous claims **characterized in that** a tubular motor (12) is housed inside the tubular shaft (2) for rotating the winding/unwinding shaft (2) of said sheet (6) and/or a device is housed (14) for powering and controlling said LED lights.

## Patentansprüche

1. Rollomarkise mit Leuchten eines Typs, Folgendes umfassend:
- einen Behang (6),
- eine Welle (2) zum Aufrollen/Abrollen des Behangs (6),
- eine Struktur (4) zum Stützen der Welle (2),
- ein Querstück (8) zum Fixieren eines Rands des Behangs (6), der dem an der Welle (2) fixierten gegenüberliegt,
- Paare von Gelenkarmen (10, 10') zum Stützen und Bewegen des Querstücks (8) in Bezug auf die Stützstruktur (4) und
- eine Vielzahl von LED-Leuchten (16), die zumindest an den Gelenkarmen (10, 10') befestigt sind, wobei die Gelenkstelle zwischen den Armen (10, 10') durch Scheiben (24, 24') ausgebildet ist, die an den zusammenwirkenden Enden der Arme (10, 10') befestigt sind, wobei die Scheiben (24, 24') zwischen diesen angeordnet sind und von einem Gelenkbolzen (26) durchquert werden, der mit den Scheiben (24, 24') eine Gelenkverbindung bildet,
**dadurch gekennzeichnet, dass**:
- der Bolzen (26) hohl ist und seine obere Endöffnung in einen oberen Hohlraum (28) mündet, der in der oberen Scheibe (24') der Verbindung ausgebildet ist und der zudem eine Leiterplatte (30) aufnimmt,
- mindestens eine LED auf dieser Leiterplatte (30) in einer Position montiert ist, die einem axialen Hohlraum (37) des Bolzens (26) zugewandt ist,
- innerhalb des axialen Hohlraums (37) ein Lichtleiter (36) aufgenommen ist, der sich am unteren Ende des axialen Hohlraums (37) des Bolzens (26) öffnet.

2. Rollomarkise nach Anspruch 1, **dadurch gekennzeichnet, dass** sie am unteren Ende des Lichtleiters (36) einen Lichtdiffusor (38) umfasst.

3. Rollomarkise nach dem vorhergehenden Anspruch, **dadurch gekennzeichnet, dass** der Lichtdiffusor (38) die Form einer Kugelkalotte aufweist.

4. Rollomarkise nach einem oder mehreren der vorhergehenden Ansprüche, **dadurch gekennzeichnet, dass** der obere Hohlraum (28) der Scheibe (24') durch einen Stopfen (34), der entfernbar ist, verschlossen ist.

5. Rollomarkise nach dem vorhergehenden Anspruch, **dadurch gekennzeichnet, dass** der Stopfen (34) die Form einer Kugelkalotte aufweist.

6. Rollomarkise nach Anspruch 1, **dadurch gekennzeichnet, dass** sie einen Lichtdiffusor (38) am unteren Ende des Lichtleiters (36) und einen Stopfen (34) zum Verschließen des oberen Hohlraums (28) umfasst, und dass der Lichtdiffusor (38) eine Form aufweist, die im Wesentlichen der Form des Stopfens (34) ähnelt.

7. Rollomarkise nach einem oder mehreren der vorhergehenden Ansprüche, **dadurch gekennzeichnet, dass** der hohle Bolzen (26) an mindestens einer der Scheiben (24') angebracht ist, die einstückig mit einem (10') der beiden Gelenkarme (10, 10') ausgebildet sind, und dass er im Vergleich zu allen Scheiben (24), die einstückig mit dem anderen Gelenkarm (10) ausgebildet sind, frei beweglich ist.

8. Rollomarkise nach einem oder mehreren der vorhergehenden Ansprüche, **dadurch gekennzeichnet, dass** die Leiterplatte (30) über ein Kabel (32) mit Strom versorgt wird, das entlang des oberen Rands des Gelenkarms (10') verläuft, an dem die obere Scheibe (24') eine Begrenzung bildet.

9. Rollomarkise nach einem oder mehreren der Ansprüche 1-7, **dadurch gekennzeichnet, dass** die Leiterplatte (30) über ein Kabel (32) mit Strom versorgt wird, das entlang des oberen Rands eines der beiden Gelenkarme (10, 10') verläuft.

10. Rollomarkise nach einem oder mehreren der vorhergehenden Ansprüche, **dadurch gekennzeichnet, dass** die Vielzahl von LED-Leuchten (16) LED-Streifen umfasst.

11. Rollomarkise nach einem oder mehreren der vorhergehenden Ansprüche, **dadurch gekennzeichnet, dass** mindestens zwei Scheiben (24) an einem Arm (10) angeordnet sind, während mindestens drei Scheiben (24') an dem anderen Arm (10') angeordnet sind.

12. Rollomarkise nach einem oder mehreren der vorhergehenden Ansprüche, **dadurch gekennzeichnet, dass** die Scheiben (24, 24') abgerundet sind.

13. Rollomarkise nach einem oder mehreren der vorhergehenden Ansprüche, **dadurch gekennzeichnet, dass** die Längsränder der Arme (10, 10') abgerundet sind.

14. Rollomarkise nach einem oder mehreren der vorhergehenden Ansprüche, **dadurch gekennzeichnet, dass** LED-Leuchten an dem starren Querstück (8) und/oder an der Stützstruktur (4) befestigt sind.

15. Rollomarkise nach einem oder mehreren der vorhergehenden Ansprüche, **dadurch gekennzeichnet, dass** ein Rohrmotor (12) im Inneren der Rohrwelle (2) zum Drehen der Aufroll-/Abrollwelle (2) des Behangs (6) aufgenommen ist und/oder eine Vorrichtung (14) zum Versorgen der LED-Leuchten mit Strom und deren Steuern aufgenommen ist.

## Revendications

1. Store à rouleau avec lumières, du type comprenant :
- une toile (6),
- un arbre (2) destiné à enrouler/dérouler ladite toile (6),
- une structure (4) destinée à supporter ledit arbre (2),
- une traverse (8) pour contraindre un bord de ladite toile (6) opposé à celui qui est contraint audit arbre (2),
- des paires de bras articulés (10, 10') destinés à supporter et à déplacer ladite traverse (8) par rapport à ladite structure de support (4), et
- une pluralité de lumières à LED (16) fixées au moins auxdits bras articulés (10, 10'), l'articulation entre lesdits bras (10, 10') étant obtenue grâce à des disques (24, 24') qui sont fixés aux extrémités coopérantes desdits bras (10, 10'), lesdits disques (24, 24') étant intercalés entre eux et étant traversés par une broche d'articulation (26), qui forme un joint d'articulation avec lesdits disques (24, 24'),
**caractérisé en ce que** :
- ladite broche (26) est creuse et présente une extrémité supérieure débouchant dans une cavité supérieure (28) étant obtenue dans le disque supérieur (24') du joint et qui loge également une carte de circuit imprimé (30),
- au moins une LED est montée sur ladite carte (30) dans une position faisant face à une cavité axiale (37) de ladite broche (26),
- à l'intérieur de ladite cavité axiale (37) est logé un guide de lumière (36) qui débouche au niveau de l'extrémité inférieure de la cavité axiale (37) de ladite broche (26).

2. Store à rouleau selon la revendication 1, **caractérisé en ce qu'**il comprend un diffuseur de lumière (38) au niveau de l'extrémité inférieure dudit guide de lumière (36).

3. Store à rouleau selon la revendication précédente, **caractérisé en ce que** ledit diffuseur de lumière (38) a la forme d'une calotte sphérique.

4. Store à rouleau selon l'une ou plusieurs des revendications précédentes, **caractérisé en ce que** la cavité supérieure (28) dudit disque (24') est fermée par un bouchon (34) étant amovible.

5. Store à rouleau selon la revendication précédente, **caractérisé en ce que** ledit bouchon (34) a la forme d'une calotte sphérique.

6. Store à rouleau selon la revendication 1, **caractérisé en ce qu'**il comprend un diffuseur de lumière (38) au niveau de l'extrémité inférieure dudit guide de lumière (36) et un bouchon (34) fermant ladite cavité supérieure (28), et **en ce que** ledit diffuseur de lumière (38) présente une forme sensiblement similaire à celle dudit bouchon (34).

7. Store à rouleau selon l'une ou plusieurs des revendications précédentes, **caractérisé en ce que** ladite broche creuse (26) est fixée à au moins l'un des disques (24') solidaires de l'un (10') des deux bras articulés (10, 10') et qu'elle est libre par rapport à tous les disques (24) solidaires de l'autre bras articulé (10).

8. Store à rouleau selon l'une ou plusieurs des revendications précédentes, **caractérisé en ce que** ladite carte de circuit imprimé (30) est alimentée par un câble (32) qui s'étend le long du bord supérieur du bras articulé (10'), auquel est restreint ledit disque supérieur (24').

9. Store à rouleau selon l'une ou plusieurs des revendications 1 - 7, **caractérisé en ce que** ladite carte de circuit imprimé (30) est alimentée par un câble (32) qui s'étend le long du bord supérieur de l'un des deux bras articulés (10, 10').

10. Store à rouleau selon l'une ou plusieurs des revendications précédentes, **caractérisé en ce que** ladite pluralité de lumières à LED (16) comprend des bandes à LED.

11. Store à rouleau selon l'une ou plusieurs des revendications précédentes, **caractérisé en ce qu'**au moins deux disques (24) sont fixés à un bras (10) tandis qu'au moins trois disques (24') sont fixés à l'autre bras (10').

12. Store à rouleau selon l'une ou plusieurs des revendications précédentes, **caractérisé en ce que** lesdits disques (24, 24') sont arrondis.

13. Store à rouleau selon l'une ou plusieurs des revendications précédentes, **caractérisé en ce que** les bords longitudinaux des bras (10, 10') sont arrondis.

14. Store à rouleau selon l'une ou plusieurs des revendications précédentes, **caractérisé en ce que** des lampes à LED sont fixées à la traverse rigide (8) et/ou à la structure de support (4).

15. Store à rouleau selon l'une ou plusieurs des revendications précédentes, **caractérisé en ce qu'**un moteur tubulaire (12) est logé à l'intérieur de l'arbre tubulaire (2) pour faire tourner l'arbre d'enroulement/déroulement (2) de ladite toile (6) et/ou qu'un dispositif (14) est logé pour alimenter et commander lesdites lumières à LED.
